# EUROPEAN PATENT APPLICATION

(11) **EP 4 741 343 A1**
(43) Date of publication of application: **13.05.2026**
(21) Application number: 24836361.6
(22) Date of filing: 04.07.2024
(51) Int. Cl.: C01B 32/21, B02C 19/06

(54) **METHOD FOR PRODUCING DOPED GRAPHITE FLAKES**

(30) Priority: 04.07.2023 KR 20230086576
(71) Applicant: Seoul National University R&DB Foundation, Seoul 08826 (KR); Graphene Square Inc., Pohang-si, Gyeongsangbuk-do 37673 (KR); Graphene Square Chemical Inc., Pohang-si, Gyeongsangbuk-do 37673 (KR)
(72) Inventor: HONG, Byung Hee, Suwon-si, Gyeonggi-do 16420 (KR); KIM, Dong Jin, Suwon-si, Gyeonggi-do 16226 (KR); PARK, Jong Bo, Anyang-si, Gyeonggi-do 14067 (KR)
(74) Representative: Ipsilon
(86) International application number: PCT/KR2024/009509
(87) International publication number: WO 2025/009914

(57) **Abstract**

The present disclosure provides a method for manufacturing doped graphite flakes. According to one embodiment of the present disclosure, the graphite flakes can be manufactured economically by feeding a doping source together with an inert gas through air jet milling when manufacturing the graphite flakes. The doped graphite flakes manufactured by the method according to one embodiment of the present disclosure can be applied to various fields, including petrochemicals, cosmetics, pharmaceuticals, batteries, etc.

## Description

### Technical Field

The present disclosure claims the benefit of Korean Patent Application No. 10-2023-0086576, filed with the Korean Intellectual Property Office on July 4, 2023, the entire contents of which are incorporated in the present disclosure. The present disclosure relates to a method for manufacturing doped graphite flakes. Specifically, the present disclosure relates to a method that can manufacture doped graphite flakes simply and effectively.

### Background Art

Graphite is a chemically considerably stable material having a shape in which rings composed of six carbons are connected to form layers, and graphite has strong heat resistance, thermal shock resistance and corrosion resistance, and good electrical and thermal conductivity.

In particular, graphite flakes are used as various electrode materials for secondary batteries, electrolysis devices, etc. and raw materials for heat-resistant devices, etc.

Graphite flakes can be manufactured by pulverizing graphite raw materials by a mechanical or chemical method. The mechanical method includes air jet milling, which is a method of using high-pressure compressed air in an air jet mill device to pulverize the sample. Specifically, the graphite raw materials fed into the air jet mill from the feed hopper are transported to the center of the inside of air jet mill by air injected at high pressures from the compressor nozzle are pulverized by interactive self-collision. The powder pulverized in the internal air jet mill is automatically classified to the desired particle size by a classifier installed at the top of the air jet mill and moved to the collection unit.

Meanwhile, when pulverizing graphite using air jet milling, it can be performed under an inert gas or halogen gas atmosphere, such as high-pressure helium (He), argon (Ar), or nitrogen (N₂). This is because milling in an air atmosphere can oxidize graphite.

Meanwhile, since conventional mechanical pulverizing simply aims to pulverize the graphite raw materials, it is necessary to improve the electrical properties of the graphite flakes through additional processes. For example, since, after manufacturing graphite flakes, a doping process must be additionally performed through a chemical vapor deposition method using amine compounds, a hydrothermal reaction method, and other chemical reactions, or plasma treatment, there are economic and time-related disadvantages in terms of mass production.

### DISCLOSURE

### Technical Problem

A technical object to be achieved by the present disclosure is to provide a method capable of economically manufacturing doped graphite flakes by simultaneously performing pulverization and doping of graphite raw materials.

### Technical Solution

According to one aspect of the present disclosure, there is provided a method for manufacturing doped graphite flakes, the method including steps of:
preparing graphite raw materials; and
pulverizing the graphite raw materials using an air jet mill,
wherein the pulverizing step is performed while feeding a mixed gas of an inert gas and a dopant source gas.

According to another aspect of the present disclosure, there are provided doped graphite flakes which are manufactured by the method described herein, and have a dopant content of 0.01 vol% to 30 vol%.

### Advantageous Effects

According to a manufacturing method according to one embodiment of the present disclosure, doped graphite flakes can be mass-produced through a simple process.

### Brief Description of Drawings

FIG. 1A is a partial schematic drawing of an air jet mill device usable in a manufacturing method according to one embodiment of the present disclosure.
FIG. 1B is a schematic drawing of a pulverization unit of the air jet mill device usable in the manufacturing method according to one embodiment of the present disclosure.
FIG. 1C is a cross-sectional schematic drawing of the pulverization unit of the air jet mill device usable in the manufacturing method according to one embodiment of the present disclosure.
FIG. 2 is a photograph of an air jet mill used in the manufacturing method according to one embodiment of the present disclosure.
FIG. 3 is SEM photographs and graphs showing the particle sizes and size distributions of graphite flakes manufactured by a manufacturing method according to Reference Example 1 of the present disclosure.
FIG. 4 is Raman spectra of graphite flakes manufactured by the manufacturing method according to Reference Example 1 of the present disclosure.
FIGS. 5A to 5H are FT-IR spectra of doped graphite flakes manufactured by manufacturing methods according to Examples 1 to 6 and Comparative Example 1 of the present disclosure.

### Best Mode for Carrying Out the Invention

When a part in the present specification is said to "include" a component, unless otherwise specifically stated, this means that other components are not excluded, but the other components may be further included.

Hereinafter, the present disclosure will be described in more detail with reference to the drawings.

A method for manufacturing doped graphite flakes according to one aspect of the present disclosure includes steps of: preparing graphite raw materials; and pulverizing the graphite raw materials using an air jet mill, wherein the pulverizing step is performed while feeding a mixed gas of an inert gas and a dopant source gas.

According to one embodiment of the present disclosure, doped graphite flakes with excellent electrical properties can be obtained in a single process by pulverizing graphite raw materials and enabling graphite to be doped at the same time.

That is, since the pulverization and doping of the graphite raw materials are performed simultaneously, doped graphite flakes can be manufactured economically.

As an air jet mill device usable in the manufacturing method according to one embodiment of the present disclosure, air jet mill devices such as a nozzle suction type (vertical or horizontal), an in-nozzle suction type, an impingement wall type, a jet stream impingement type, a fluidized bed type, a hybrid type, etc. may be used without limitation.

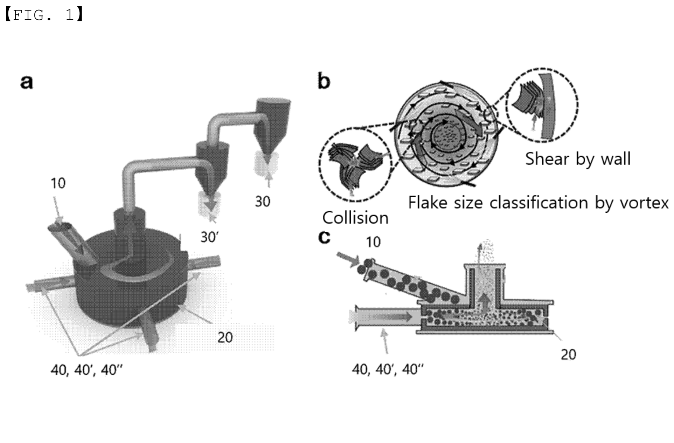

FIG. 1 is a schematic diagram of an air jet mill device used in a manufacturing method according to one embodiment of the present disclosure.

FIG. 1A is a partial schematic drawing of an air jet mill device usable in a manufacturing method according to one embodiment of the present disclosure, FIG. 1B is a schematic drawing of a pulverization unit of the air jet mill device usable in the manufacturing method according to one embodiment of the present disclosure, and FIG. 1C is a cross-sectional schematic drawing of the pulverization unit of the air jet mill device usable in the manufacturing method according to one embodiment of the present disclosure.

An air jet mill device is a device which consists of a jet mill, that performs the pulverization action, and a compressor that provides high-pressure air to the jet mill so that the device pulverizes particles through collision, friction, and shear force by forming a supersonic jet stream within the pulverization chamber using the high-pressure compressed air.

The pulverization power source of these air jet mill devices is a jet stream. High-pressure compressed air is required to generate this jet stream, which requires an air compressor.

A non-cooling type air jet mill device 1 usable in a manufacturing method according to one embodiment of the present disclosure includes, as shown in FIGS. 1A and 1C, a raw material feed unit 10 for feeding graphite raw materials, a pulverization unit 20 of an air jet mill for pulverizing and classifying the raw materials fed from the raw material feed unit 10 using a jet stream of compressed gas fed through gas inlets 40, 40', and 40", and collection units 30 and 30' for collecting the pulverized and classified raw materials according to size.

First, the graphite raw materials are fed to the pulverization unit 20 through the raw material feed unit 10. Simultaneously, a mixed gas of an inert gas and a doping source gas is fed into the pulverization unit 20 through the gas inlets 40, 40', and 40".

As illustrated in FIG. 1B, a vortex is generated by the mixed gas of the inert gas and the doping source gas injected into the pulverization unit 20, which causes collisions and friction between the graphite raw materials, pulverizing the graphite raw materials, and the pulverized graphite raw materials that reach the inner wall of the pulverization unit are further pulverized by the shear force. Doping of pulverized graphite occurs by the doping source gas during this pulverization process. In this way, the graphite flakes that have been pulverized and doped are discharged out of the pulverization unit 20 through a discharge port and collected in the collection units 30 and 30'. The collected doped graphite flakes can repeat the pulverization process as needed.

According to one embodiment of the present disclosure, the dopant source gas may be one or more sources selected from ammonia (NH₃), hydrazine (NH₂NH₂), pyridine (C₅H₅N), acetonitrile (CH₃CN), triethanolamine (C₆H₁₅NO₃), and aniline (C₆H₇N), but is not limited thereto.

According to one embodiment of the present disclosure, the inert gas may be nitrogen or argon.

According to one embodiment of the present disclosure, the inert gas and the dopant source gas in the mixed gas may have a mixing volume ratio of 1:0.001 to 1:1000, for example, 1:0.001 to 1:100, 1:0.001 to 1:50, 1:0.001 to 1:30, 1:0. 01 to 1:20, 1:0.001 to 1:10, 1:0.01 to 1:1000, 1:0.01 to 1:100, 1:0.01 to 1:50, 1:0.01 to 1:30, 1:0.01 to 1:20, 1:0.01 to 1:10, 1:0.1 to 1:1000, 1:0.1 to 1:100, 1:0.1 to 1:50, 1:0.1 to 1:30, 1:0.1 to 1:20, 1:0.1 to 1:10, 1:1 to 1:1000, 1:1 to 1:100, 1:1 to 1:50, 1:1 to 1:30, 1:1 to 1:20, or 1:1 to 1:10. When the mixing volume ratio is within the above range, doping of the dopant may be effectively performed while pulverization of the graphite raw materials is well performed.

According to one embodiment of the present disclosure, the mixed gas may have a feed rate of 0.1 to 1,000 standard cubic centimeter per minute (SCCM), for example, 0.1 to 500 SCCM, 0.1 to 300 SCCM, 0.1 to 200 SCCM, 0.1 to 180 SCCM, 0.1 to 150 SCCM, 0.1 to 130 SCCM, 0.1 to 120 SCCM, 0.1 to 110 SCCM, or 1 to 100 SCCM. When the mixed gas is fed at a feed rate within the above range, doped graphite flakes of a desired size can be obtained, and doping can be effectively performed.

Since the air jet mill device usable in the manufacturing method according to one embodiment of the present disclosure can exhibit a cooling effect when a high-pressure mixed gas is subjected to volume expansion after passing through a nozzle, equipment separately dissipating heat (such as a chiller) may be excluded. Since the air jet mill device usable in the manufacturing method according to one embodiment of the present disclosure uses toxic gases, such as ammonia, as the dopant source gas, it may additionally include a scrubber capable of purifying these gases.

Furthermore, when a device equipped with a classification capability, such as a cyclone, an airflow-type classifier or the like, is installed as a closed circuit in the air jet mill device used so that flakes with relatively large particle sizes are classified and removed, flakes with a uniform particle diameter can be efficiently obtained, and the maximum particle diameter or average particle diameter can be suppressed to a small size.

Doped graphite flakes according to another aspect of the present disclosure are manufactured by the above method, and have a dopant content of 0.01 vol% to 30 vol%. The doped graphite flakes may have excellent electrical properties by having a dopant content within the above range. The dopant content in the doped graphite flakes can be measured by a known method, and it can be measured by, for example, energy dispersive X-ray spectroscopy (EDS or EDX), X-ray photoelectron spectroscopy (XPS), Raman spectroscopy, or Fourier transform infrared spectroscopy (FT-IR).

According to one embodiment of the present disclosure, the dopant may be one or more dopants selected from -NH₂, -NHNH₂, - C₅H₄N, -CH₂CN, -C₆H₁₄NO, and -C₆H₆N. As the graphite flakes are doped with the dopant, the graphite flakes may have improved electrical properties.

According to one embodiment of the present disclosure, the doped graphite flakes may have an average particle diameter of 0.01 to 100 µm, 0.05 to 50 µm, 0.1 to 10 µm, or 1 to 5 µm. The doped graphite flakes may be effectively used in electrical devices such as desired electrode materials by having an average particle diameter within the above range.

The doped graphite flake according to one embodiment of the present disclosure can be applied to various fields, such as petrochemicals, cosmetics, pharmaceuticals, batteries, etc.

### Mode for Carrying Out the Invention

Hereinafter, the present disclosure will be described in more detail through Examples, but the scope of the present disclosure is not limited thereto.

### Examples

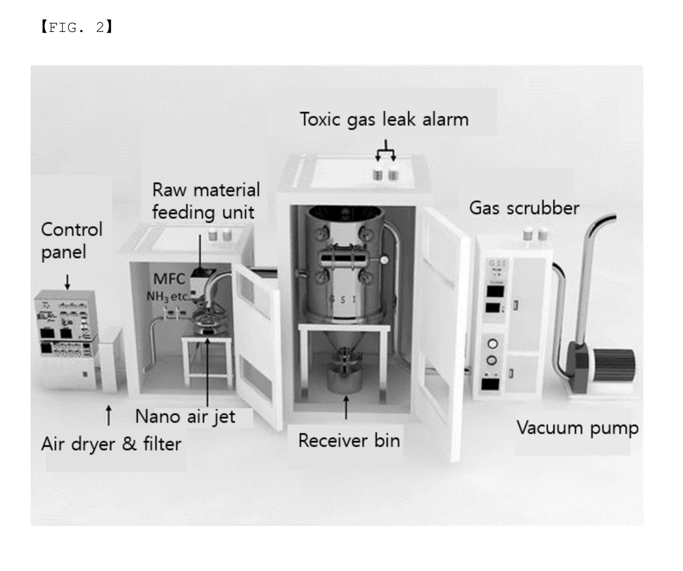

FIG. 2 is a photograph of an air jet mill device used in the following Examples. The pulverization conditions of the air jet mill device of FIG. 2 are as follows:
Pulverizing air pressure: 4.0 to 5.0 bar
Raw material input air pressure: 5.0 to 6.5 bar
Raw material input screw speed: 8 to 10 rpm

### Reference Example 1

2,000 g of graphite purchased from Seongha Co., Ltd. was prepared as a raw material. The above pulverization conditions were set before operating an air jet mill device. The inert gas (nitrogen) was prepared to be fed, the prepared graphite raw materials were put into the inlet of the air jet mill device, and the air jet mill device was operated to pulverize the graphite raw materials for 4 hours. The inert gas was fed during the pulverization process. The pulverized graphite flakes were collected at the outlet of the air jet mill device. The graphite flakes obtained by the above method were pulverized three more times under the same conditions, and the pulverized graphite flakes were each collected.

### Manufacturing of Doped Graphite Flakes

### Example 1

Doped graphite flakes were manufactured by feeding a gas in which an inert gas and a dopant source gas were mixed. Graphite was pulverized in the same manner as in Reference Example 1 except that the pulverization conditions of the air jet mill related to the mixed gas including the dopant source gas were changed as follows. Ammonia was selected as the dopant source gas in Example 1.
Mixed volume ratio of the inert gas and the dopant source gas: 1:10
Mixed gas feed rate: 10 standard cubic centimeters per minute (SCCM)
Mixed gas pressure: 1.0 MPa

### Examples 2 to 6 and Comparative Example 1

Doped graphite flakes were manufactured in the same manner as in Example 1 except that the air jet mill pulverization conditions were changed as shown in Table 1 below.

**[Table 1]**

| | Mixed gas volume ratio (inert gas : dopant source gas) | Mixed gas feed rate (SCCM) |
|---|---|---|
| Example 2 | 1:0.1 | 10 |
| Example 3 | 1:1 | 10 |
| Example 4 | 1:10 | 10 |
| Example 5 | 1:10 | 0.1 |
| Example 6 | 1:1 | 100 |
| Comparative Example 1 | 1:0 | 0.1 |

### Measurement of Particle Size and Size Distribution of Graphite Flakes

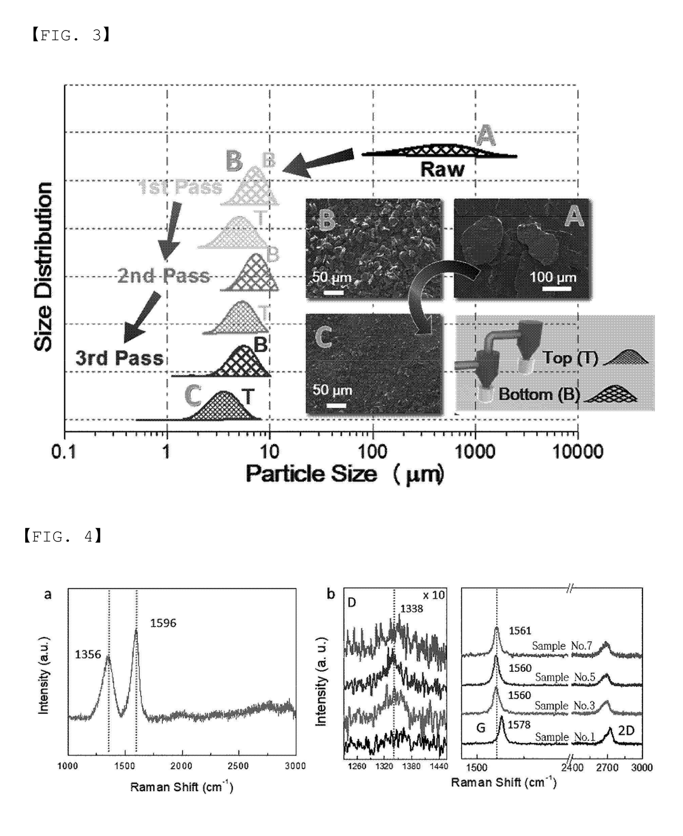

FIG. 3 is SEM photographs and graphs showing the particle sizes and size distributions of the graphite flakes of Reference Example 1.

As shown in FIG. 3, it can be seen that the graphite flakes of Reference Example 1 have an average particle diameter of 1 µm to 15 µm. In addition, it can be seen that, as the number of pulverization cycles increases, the graphite flake size decreases, and it can be seen that the particle diameter distribution also narrows to result in increased flake size uniformity.

Based on this, the doped graphite flakes of Examples 1 to 6, like the graphite flakes of Reference Example 1, also have an average particle diameter of 1 µm to 15 µm, and it can be expected that, as the number of pulverization cycles increases, the size of the doped graphite flakes decreases and their uniformity increases.

### Quality Measurement of Graphite Flakes

FIG. 4 is Raman spectra of the graphite flakes of Reference Example 1: (Sample No. 1: Graphite raw materials, Sample No. 3: One-time pulverization execution, Sample No. 5: Two-time pulverization execution, Sample No. 7: Three-time pulverization execution). For reference, the Raman spectra of graphene oxides are also shown.

As shown in FIG. 4, the D peak of the graphite flakes indicates less damage even after pulverization using an air jet mill.

### Measuring Whether Graphite Flakes Have Been Doped or Not

Meanwhile, to check whether the manufactured graphite flakes have been doped or not, Fourier transform infrared (FT-IR) spectroscopy analysis was performed on the graphite flakes of the Examples 1 to 6 and the Comparative Example.

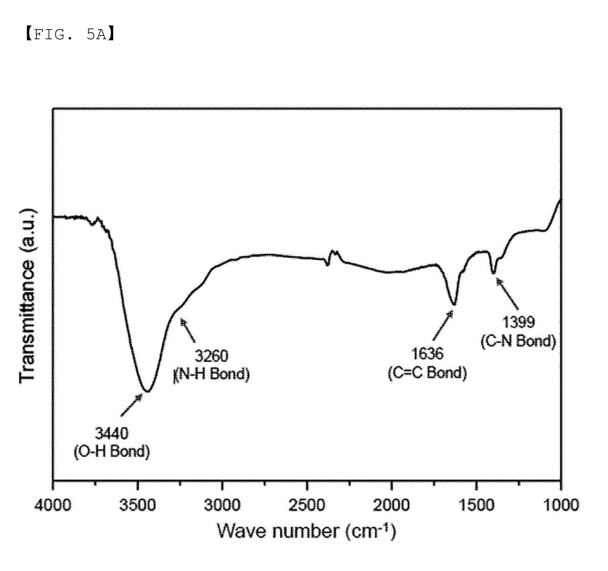

FIG. 5A is an FT-IR spectrum of the doped graphite flakes manufactured in the present Example 1.

As shown in FIG. 5A, it can be seen that the doped graphite flakes of Example 1 were effectively doped with -NH₂.

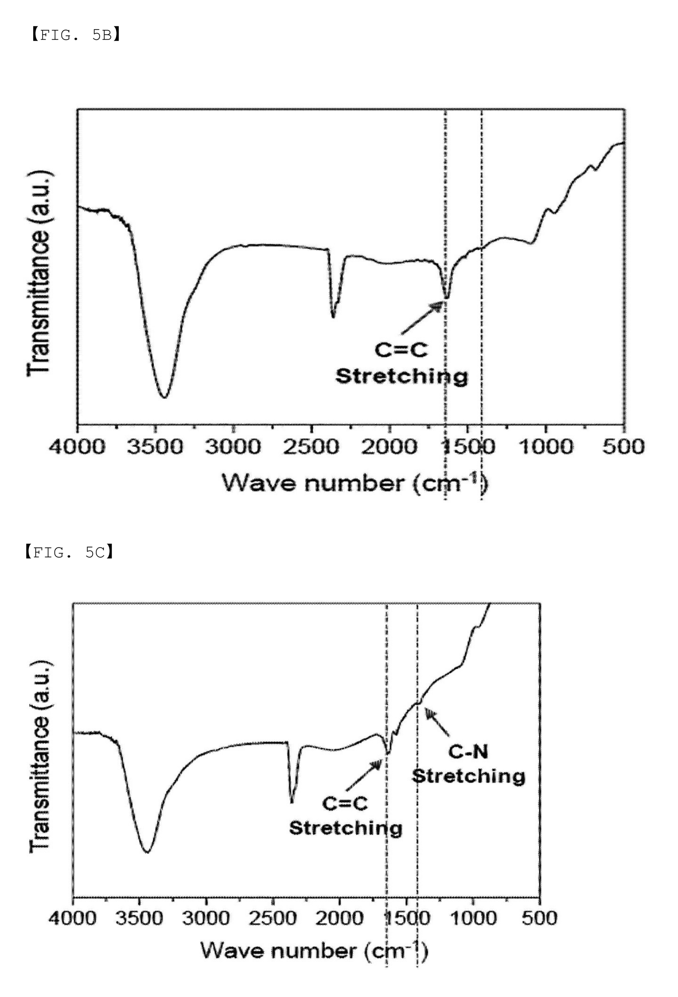

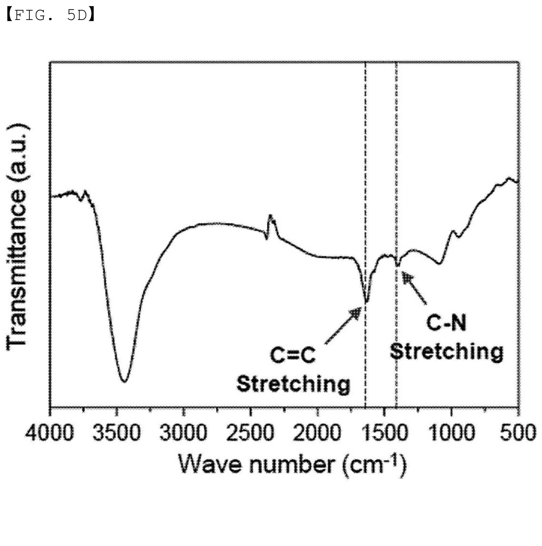

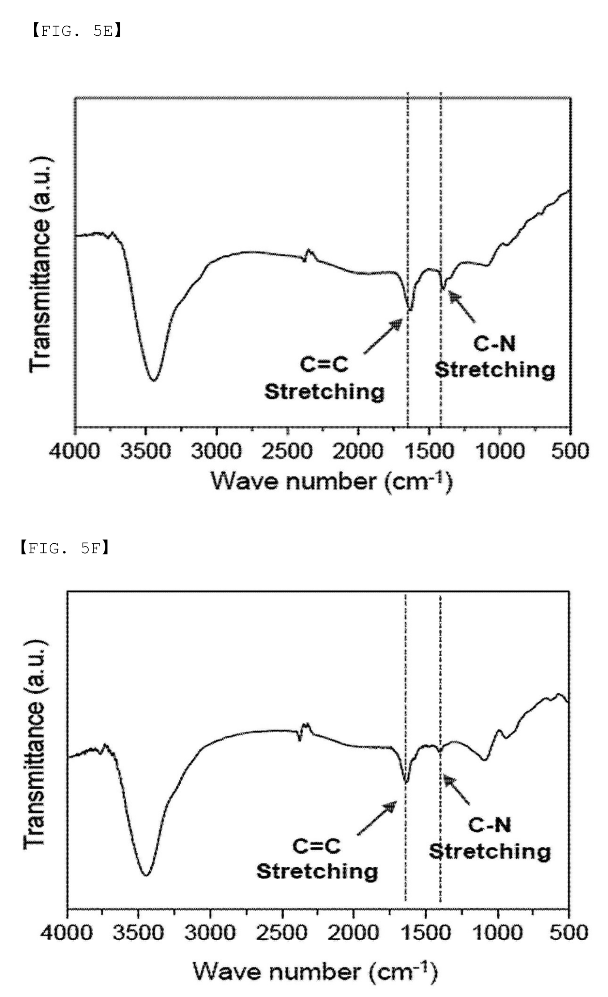

FIGS. 5B, 5C, 5D, and 5E are FT-IR spectra of Comparative Example 1, Example 2, Example 3, and Example 4, respectively. It can be confirmed through this that as the ratio of the dopant source gas in the mixed gas increases, the C-N peak becomes more pronounced, and -NH₂ is doped more.

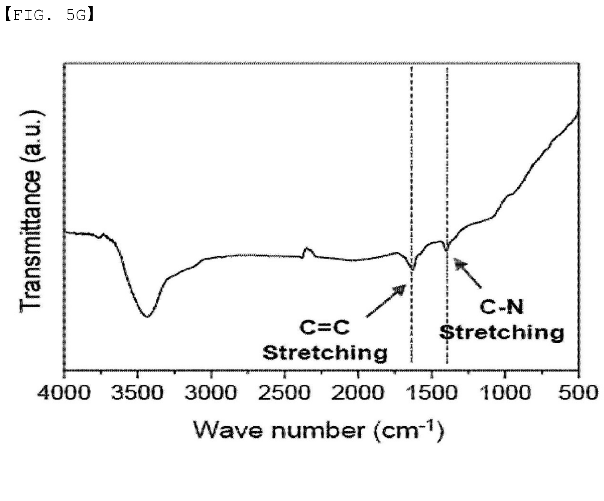

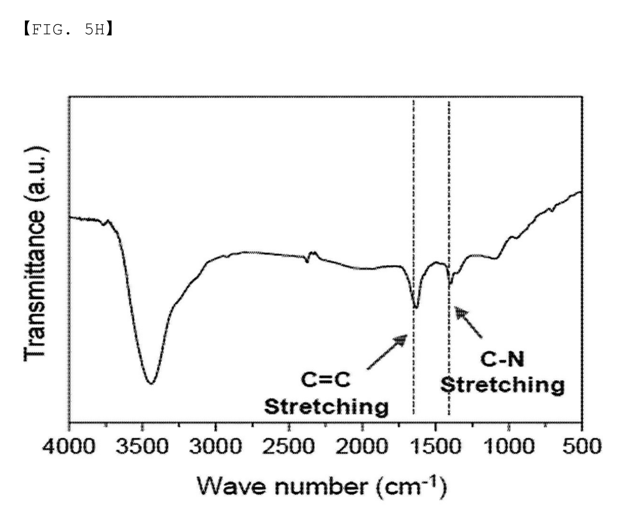

FIGS. 5F, 5G, and 5H are FT-IR spectra of Examples 5, 3, and 6, respectively. It can be confirmed through this that as the ratio of the dopant source gas in the mixed gas increases, the C-N peak becomes more pronounced, and -NH₂ is doped more.

As described above, according to one embodiment of the present disclosure, graphite flakes can be simultaneously produced and doped with a dopant to induce superior chemical activity, thereby increasing the scalability of the graphite flakes in various fields compared to existing methods.

The present disclosure is not limited by the above-described embodiments and the accompanying drawings, but is defined by the appended claims. Accordingly, various substitutions, modifications, and changes can be made by those skilled in the art without departing from the technical spirit of the present disclosure described in the claims, and such substitutions, modifications, and changes are intended to fall within the scope of the present disclosure.

### Description of reference numerals

1: Air jet mill device
10: Feed unit
20: Pulverization unit
30, 30': Collection units
40, 40', 40'': Gas inlets

## Claims

1. A method for manufacturing doped graphite flakes, the method comprising steps of:
preparing graphite raw materials; and
pulverizing the graphite raw materials using an air jet mill,
wherein the pulverizing step is performed while feeding a mixed gas of an inert gas and a dopant source gas.

2. The method of claim 1, wherein the dopant source gas is one or more selected from ammonia (NH₃), hydrazine (NH₂NH₂), pyridine (C₅H₅N), acetonitrile (CH₃CN), triethanolamine (C₆H₁₅NO₃), and aniline (C₆H₇N)

3. The method of claim 1, wherein the inert gas and the dopant source gas in the mixed gas have a mixing volume ratio of 1:0.001 to 1:1000.

4. The method of claim 1, wherein the mixed gas has a feed rate of 0.1 to 1,000 standard cubic centimeter per minute (SCCM).

5. Doped graphite flakes which are manufactured by the method according to any one of claims 1 to 4, and have a dopant content of 0.01 vol% to 30 vol%.

6. The doped graphite flakes of claim 5, having an average particle diameter of 0.01 to 100 µm.

7. The doped graphite flakes of claim 5, wherein the dopant is one or more selected from -NH₂, -NHNH₂, -C₅H₄N, -CH₂CN, -C₆H₁₄NO₃, and -C₆H₆N.
